# EUROPEAN PATENT APPLICATION

(11) **EP 4 122 878 A1**
(43) Date of publication of application: **25.01.2023**
(21) Application number: 21770562.3
(22) Date of filing: 02.02.2021
(51) Int. Cl.: C01B 17/26, H01M 6/18, H01M 10/0562

(54) **METHOD FOR PRODUCING LITHIUM SULFIDE**

(30) Priority: 17.03.2020 JP 2020046246
(71) Applicant: Mitsubishi Materials Corporation, Tokyo 100-8117 (JP)
(72) Inventor: KIKUCHI, Fumitake, Naka-shi, Ibaraki 311-0102 (JP); KUBA, Kanji, Naka-shi, Ibaraki 311-0102 (JP)
(74) Representative: Gille Hrabal Partnerschaftsgesellschaft mbB Patentanwälte
(86) International application number: PCT/JP2021/003625
(87) International publication number: WO 2021/186919

(57) **Abstract**

A method for producing lithium sulfide includes: a preparation process (step S12) at which a raw material and a reducing agent are charged into a furnace, the raw material being mainly composed of lithium sulfate having a property of weight loss of 5% or more to 25% or less upon heating to 120°C; and a temperature raising process (step S14) at which the raw material and the reducing agent are heated in the furnace to raise the temperature.

## Description

### Field

The present invention relates to a method for producing lithium sulfide.

### Background

Lithium sulfide is known as a solid electrolyte for a lithium battery. Patent Literature 1 discloses the method for producing lithium sulfide by causing lithium hydroxide to react with hydrogen sulfide in an aprotic organic solvent to form lithium hydrosulfide, and then further continuing the reaction to obtain lithium sulfide.

Patent Literature 2discloses the method for producing lithium sulfide without using an organic solvent. In Patent Literature 2, metal lithium is caused to react with sulfur vapor or hydrogen sulfide to form lithium sulfide on the metal lithium. The unreacted metal lithium is then melted at high temperature so as to diffuse and penetrate into the already formed lithium sulfide, and then cooled. Then, metal lithium is caused to react again with sulfur vapor or hydrogen sulfide to produce lithium sulfide. This cycle is repeated to cause metal lithium to react completely.

Patent Literature 3 discloses the method for producing lithium sulfide by causing lithium carbonate to react with hydrogen sulfide.

Patent Literature 4 discloses the method for producing lithium sulfide without using hydrogen sulfide. In Patent Literature 4, lithium sulfate and carbon powder are made to fine particles, respectively, which is then followed by mixing them, so that the reaction area is increased, resulting in the reduction of the unreacted raw materials.

### Citation List

### Patent Literature

Patent Literature 1: Japanese Patent Application Laid-open No. 2006-151725
Patent Literature 2: Japanese Patent Application Laid-open No. H09-110404
Patent Literature 3: Japanese Patent Application Laid-open No. 2012-221819
Patent Literature 4: Japanese Patent Application Laid-open No. 2013-227180

### Summary

### Technical Problem

The technology described in Patent Literature 1 increases a cost because this uses an organic solvent. The technology described in Patent Literature 2 requires repeated cycles of the reaction thereby increasing a cost. The technology described in Patent Literature 3 uses a toxic hydrogen sulfide gas, which is difficult in management thereof, so that this may make it difficult to ensure the safety. The technology described in Patent Literature 4 increases the number of the processes because this requires to make fine particles and mix them. In addition, when the product is produced using a facility such as a rotary kiln, the fine particles may scatter inside the facility, so that this may cause the decrease in the recovered amount thereof. Accordingly, there is a room for improvement in the method for producing lithium sulfide having a high ionic conductivity to be used in the lithium battery.

The present invention was made in view of the above circumstances, so that an object of the present invention is to provide a more preferable method for producing lithium sulfide having a high ionic conductivity. Solution to Problem

To solve the problem above, a method for producing lithium sulfide comprises: a preparation process at which a raw material and a reducing agent are charged into a furnace, the raw material being mainly composed of lithium sulfate having a property of weight loss of 5% or more to 25% or less upon heating to 120°C; and a temperature raising process at which the raw material and the reducing agent are heated in the furnace to raise temperature.

### Advantageous Effects of Invention

The method for producing lithium sulfide according to the present invention has the advantageous effect that lithium sulfide having a high ionic conductivity can be produced more preferably.

### Brief Description of Drawings

FIG. 1 is a flowchart illustrating the process in the method for producing lithium sulfide.
FIG. 2 is a schematic diagram of one example of the production equipment including a rotary kiln.
FIG. 3 is the SEM photograph of the lithium sulfate raw material when the temperature is raised according to the present embodiment.
FIG. 4 is the graphs of the test results, illustrating the X-ray diffraction measurement results in Examples.
FIG. 5 is the graphs of the test results, illustrating the AC impedance measurement results in Examples. Description of Embodiments

Hereinafter, the present invention will be described in detail with reference to the drawings. The present invention is not limited by the following embodiment to carry out the invention (hereinafter, this is referred to as "embodiment"). In addition, the composition elements in the following embodiment include those that can be readily conceived by those skilled in the art as well as those that are substantially identical to the so-called equivalent. Furthermore, the composition elements disclosed in the following embodiment can be combined as appropriate.

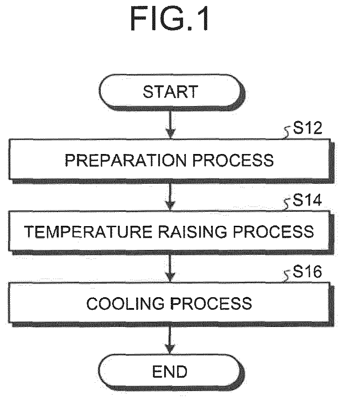

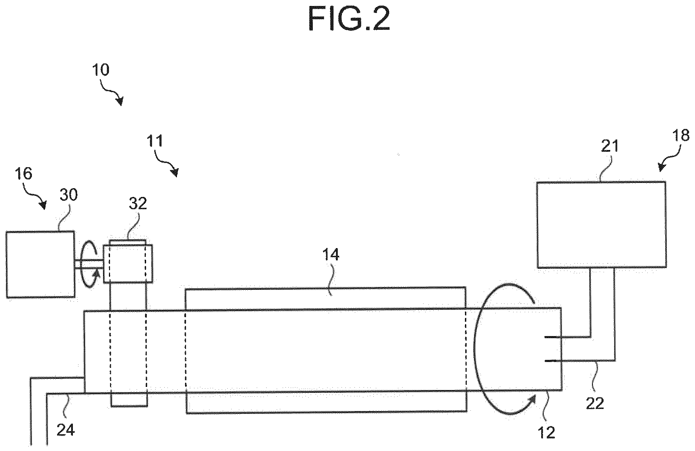

The method for producing lithium sulfide will be explained using FIGS. 1 and 2. FIG. 1 is the flowchart illustrating the processes in the method for producing lithium sulfide. FIG. 2 is the schematic diagram of one example of the production equipment including a rotary kiln.

In the method for producing lithium sulfide according to the present embodiment, lithium sulfide is produced by heating lithium sulfate which is used as a raw material and a reducing agent in one furnace. The raw material is mainly composed of lithium sulfate having a property of weight loss of 5% or more to 25% or less by 120°C.

The raw material, mainly composed of lithium sulfate having a property of weight loss of 5% or more to 25% or less by 120°C, is a mixture of the lithium sulfates in a hydrated state in which the weight loss of 5% or more to 25% or less occurs in the lithium sulfate N hydrate (N = 0 to 1). When the lithium sulfate N hydrate like this is used, fine cracks are formed on the surface of lithium sulfate due to the volume change during temperature raising; so, the surface area thereof is increased, thereby resulting in reduction of the unreacted residue thereof. The weight loss of less than 5% is not sufficient to form the cracks in the entire raw material. In the case of the weight loss of 25% or more, the water content is too much so that the particles bind to each other, making it difficult to mix with the reducing agent. In addition, the water that is more than necessary to form the cracks needs to be volatilized; thus, this is ineffective.

The average particle diameter of lithium sulfate is preferably in the range of 10 µm or more to 100 µm or less, more preferably in the range of 15 µm or more to 80 µm or less, while even more preferably in the range of 30 um or more to 50 µm or less. Lithium sulfate, the raw material for the method for producing lithium sulfide according to the present embodiment, is not necessarily in the form of particulate. Therefore, even when the equipment like a rotary kiln 11 is used for production, the possibility of scattering powdered lithium sulfate inside a kiln main body (furnace) 12 of the rotary kiln 11 to cause the recovery difficulty can be reduced.

The reducing agent may be a material mainly composed of a carbon such as an activated carbon, for example, and the material thereof is not restricted. In the present embodiment, the case in which the reducing agent is an activated carbon will be described. The average particle diameter of the activated carbon is preferably in the range of 1 µm or more to 10 µm or less.

As described in FIG. 1, the method for producing lithium sulfide includes a preparation process (step S12) at which the lithium sulfate and the reducing agent are charged into a furnace, a temperature raising process (step S14) at which the furnace is heated, and a cooling process (step S16) at which the furnace is cooled.

### [Preparation Process]

At the preparation process, the lithium sulfate and reducing agent with a predetermined molar ratio are charged into the furnace. Also at the preparation process, the lithium sulfate and the reducing agent are mixed at a predetermined molar ratio. The molar ratio of the lithium sulfate to the activated carbon, the reducing agent, is preferably, for example, in the range of 2 or more to 4 or less as the ratio C/Li₂SO₄.

### [Temperature Raising Process]

At the temperature raising process, the lithium sulfate and the reducing agent are heated in the furnace to raise the temperature. At the temperature raising process, the lithium sulfate is dehydrated and at the same time reduced by the reducing agent. At the temperature raising process, the temperature is raised under an inert atmosphere with the dew point of, for example, -60°C, and in the temperature range of 700°C or higher to 950°C or lower, while preferably 800°C or higher to 850°C or lower. The inert gas of argon or nitrogen is used. In the temperature range of 700°C or lower, the reaction of the lithium sulfate with the reducing agent is so slow that the productivity is low. In the temperature range of 950°C or higher, which is higher than the melting point of lithium sulfide, the lithium sulfide is melted. In the temperature range of higher than 850°C, this is higher than the melting point of the raw material lithium sulfate, so that the remaining unreacted lithium sulfate is melted. In the temperature range of 800°C or higher to 850°C or lower, the lithium sulfate does not melt, so that the lithium sulfide having the particle shape thereof retained can be obtained. In the temperature range of 800°C or higher to 850°C or lower, the reaction rate is high, so that productivity is high.

At the temperature raising process, it is preferable to reach the intended temperature range by heating at the temperature raising rate of 10°C/min or higher after the start of heating. At the temperature raising process, the heating time in the intended temperature range is preferably in the range of 5 minutes or longer to 90 minutes or shorter. The heating time is preferably within the range described above because keeping the system at a high temperature for a long time gradually causes the grain to grow thereby leading to a decrease in reactivity.

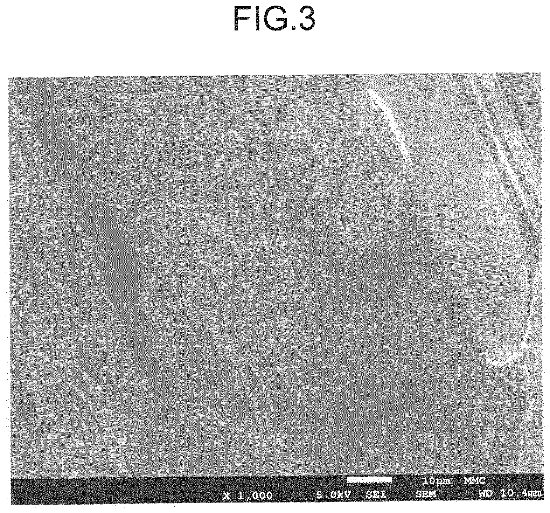

FIG. 3 is the SEM photograph of the lithium sulfate raw material when the temperature is raised according to the present embodiment. At the temperature raising process, the lithium sulfate particle under the condition according to the present embodiment significantly changes the volume thereof, resulting in formation of fine cracks (fissures) thereby causing the increase in the reaction area, as can be seen in FIG. 3. This reduces the amount of the lithium sulfate that remains unreacted. The lithium sulfate particles are finely cracked, so that it is not necessary to prepare the lithium sulfate in the form of fine powders.

### [Cooling Process]

At the cooling process, after the temperature raising process, the furnace is cooled to 200°C or lower. At the cooling process, the furnace having the temperature raised is cooled naturally.

After the cooling process, the lithium sulfide is taken out from the furnace.

The preparation process, the temperature raising process, and the cooling process may be carried out using production equipment 10 having, for example, the rotary kiln 11.

### [Production Equipment]

The production equipment 10 is the equipment with which the lithium sulfide is produced by placing the lithium sulfate as the raw material and the activated carbon as the reducing agent in one furnace, which is then followed by raising the temperature thereof. The production equipment 10 includes the rotary kiln 11, a material feeder 18, and a discharge pipe 24.

The rotary kiln 11 includes a kiln main body 12, a heater 14, and a driving unit 16. The kiln main body 12 is a cylindrical member. It is preferable that the kiln main body 12 is arranged such that the central axis of the cylindrical shape thereof is inclined to a horizontal direction so that the end in the side of the material feeder 18 is vertically upper than the other end thereof. The heater 14 heats the kiln main body 12.

A driving unit 16 rotates the kiln main body 12 around the central axis of the cylindrical shape as the rotation axis. The driving unit 16 includes a driving power source 30 and a transmission mechanism 32. The driving power source 30 generates a rotational power of a motor and the like. The transmission mechanism 32 transmits the rotational power of the driving power source 30 to the kiln main body 12.

The material feeder 18 charges the lithium sulfate and the activated carbon into the rotary kiln 11. The material feeder 18 includes a material reservoir 21 and a feed pipe 22. The material reservoir 21 stores the lithium sulfate and the activated carbon. The feed pipe 22 connects the material reservoir 21 to the kiln main body 12. The feed pipe 22 is connected to the kiln main body 12 in the upstream side of the conveying path that transports the lithium sulfate and the activated carbon. The feed pipe 22 supplies the lithium sulfate and the activated carbon from the material reservoir 21 to the kiln main body 12.

The discharge pipe 24 is connected to the opposite end of the kiln main body 12 to which the feed pipe 22 is connected. The discharge pipe 24 is connected to the kiln main body 12 in the downstream side of the conveying path that transports the lithium sulfate and the activated carbon. The discharge pipe 24 discharges the lithium sulfide having been produced while passing through the kiln main body 12.

In the production equipment 10 that is configured as described above, first, the lithium sulfate and the activated carbon in a predetermined molar ratio are charged into the kiln main body 12 of the rotary kiln 11 from the material feeder 18. The lithium sulfate and the reducing agent charged into the kiln main body 12 are mixed. At the temperature raising process, the kiln main body 12 is rotated around the rotation axis by the driving unit 16 while being heated by the heater 14. The lithium sulfate and the activated carbon charged into the kiln main body 12 move along the conveying path from the feed pipe 22 to the discharge pipe 24 due to the rotation of the kiln main body 12. The lithium sulfate and activated carbon moving along the conveying path are heated to the prescribed temperature by the heater 14. Because the lithium sulfate and the activated carbon are not in the form of particulate, scattering in the conveying path can be suppressed. Then, at the cooling process, the heater 14 is turned off to cool the kiln main body 12 and the lithium sulfide. The produced lithium sulfide is then discharged from the discharge pipe 24 and recovered.

### [Advantageous Effects of the Embodiment]

According to the present embodiment, the lithium sulfide can be produced by charging the lithium sulfate and the reducing agent into one furnace and heating them. In the present embodiment, the lithium sulfate used as the raw material does not require preparation of the fine particles, so that the increase in the number of the process can be suppressed. When producing by using the production equipment 10 having the rotary kiln 11, the scattering in the conveying path and the decrease in the recover amount can be suppressed. Accordingly, the present embodiment can provide the suitable method for producing lithium sulfide using the production equipment 10 having the rotary kiln 11.

In the present embodiment, the toxic hydrogen sulfide gas is not used in the production process. According to the present embodiment, the production process can be easily controlled so that the safety can be ensured.

The present embodiment uses the lithium sulfate and the reducing agent without using an organic solvent in the production process; thus, the production cost can be reduced.

Because the present embodiment does not require repetition of the production process, the time required for the production can be reduced; thus, the production cost can be reduced.

Therefore, according to the present embodiment, the lithium sulfide can be produced more suitably.

### [Examples]

Next, the method for producing lithium sulfide will be specifically explained using Examples. At the preparation process, 0.84 g of lithium sulfate monohydrate, the raw material, and 0.19 g of activated carbon, the reducing agent, were weighed and mixed using a mortar under an inert atmosphere. The weight loss of the lithium sulfate monohydrate used here upon heating to 120°C is approximately 15%. The mixture of the lithium sulfate monohydrate and the activated carbon was charged into a crucible formed of aluminum oxide.

After the preparation process, the crucible in which the mixture of the lithium sulfate monohydrate and the activated carbon was charged was placed in a small muffle furnace; then, the temperature thereof was raised to 850°C in 10 minutes. The state at 850°C was maintained for 30 minutes.

After completion of the temperature raising process, the inside of the muffle furnace was cooled naturally at the cooling process; then, the sample was collected.

The sample thus produced was ground using an agate mortar; then, the unreacted residue was evaluated by measurement of the powder X-ray diffraction using D8ADVANCE instrument manufactured by Burker Corp. The crushed sample (0.3 g) was filled in the conductivity measurement cell; then, the AC impedance was measured in the measurement range from 1 Hz or more to 7 MHz or less at room temperature of 25°C under the applied pressure of 360 Mpa.

In Examples, the lithium sulfate monohydrate was used as the raw material. In Examples, the activated carbon was used as the reducing agent. In Examples, the molar ratio of the activated carbon to oxygen (C/O₂) was 1.2. In Examples, the temperature at the temperature raising process was 850°C. In Examples 1 to 3, the average particle diameter of the raw material was varied.

The range of the average particle diameter of the raw material lithium sulfate monohydrate ranging from 80 µm or more to 100 µm or less was defined as "large", from 30 µm or more to 50 µm or less as "medium", and 15 µm or less as "small".

In Comparative Examples, the lithium sulfate anhydrate was used instead of the lithium sulfate monohydrate as the raw material. In Comparative Examples, the same reducing agent as in Examples was used. In Comparative Examples 1 to 5, the average particle diameter of the raw material and the temperature were varied.

### [Example 1]

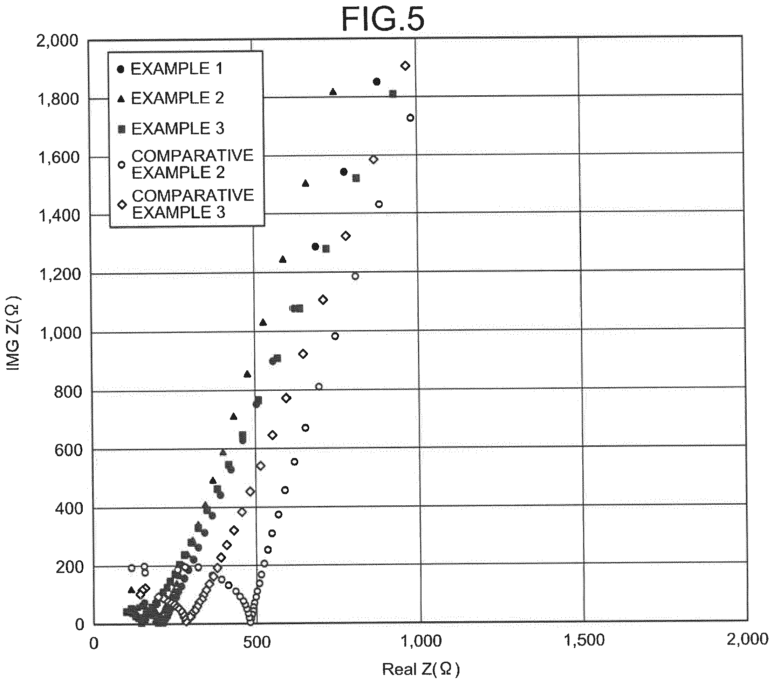

In Example 1, the average particle diameter of the lithium sulfate monohydrate was "large". The measurement result of the AC impedance of the sample produced in Example 1 is described in FIG. 5.

### [Example 2]

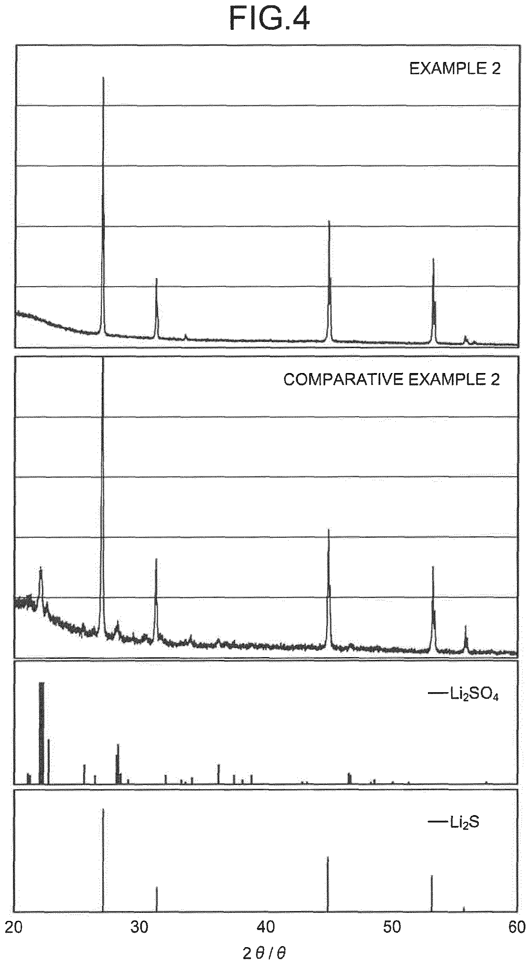

In Example 2, the average particle diameter of the lithium sulfate monohydrate was "medium". The result of the powder X-ray diffraction measurement of the sample produced in Example 2 is described in FIG. 4. The measurement result of the AC impedance of the sample produced in Example 2 is described in FIG. 5.

### [Example 3]

In Example 3, the average particle diameter of the lithium sulfate monohydrate was "medium". The measurement result of the AC impedance of the sample produced in Example 3 is described in FIG. 5.

### [Comparative Example 1]

In Comparative Example 1, the average particle diameter of the lithium sulfate anhydrate was "large". In Comparative Example 1, the temperature at the temperature raising process was 850°C. The weight loss of the lithium sulfate anhydrate used in Comparative Example upon heating to 120°C was approximately less than 5%.

### [Comparative Example 2]

In Comparative Example 2, the average particle diameter of the lithium sulfate anhydrate was "medium". In Comparative Example 2, the temperature at the temperature raising process was 850°C. The result of the powder X-ray diffraction measurement of the sample produced in Comparative Example 2 is described in FIG. 4. The measurement result of the AC impedance of the sample produced in Comparative Example 2 is described in FIG. 5.

### [Comparative Example 3]

In Comparative Example 3, the average particle diameter of the lithium sulfate anhydrate was "small". In Comparative Example 3, the temperature at the temperature raising process was 850°C. The measurement result of the AC impedance of the sample produced in Comparative Example 3 is described in FIG. 5.

### [Comparative Example 4]

In Comparative Example 4, the average particle diameter of the lithium sulfate anhydride was "small". In Comparative Example 4, the temperature at the temperature raising process was 750°C.

### [Comparative Example 5]

In Comparative Example 5, the average particle diameter of the lithium sulfate anhydrate was "small". In Comparative Example 5, the temperature at the temperature raising process was 900°C.

The measurement results of Examples 1, 2, and 3, and Comparative Examples 1, 2, 3, 4, and 5 are summarized in Table 1 below.

**Table 1**

| | Raw material | Particle diameter of raw material | Reducing agent | Reducing agent (C/O²) | Temperature | Unreacted residue | Form |
|---|---|---|---|---|---|---|---|
| Example 1 | Lithium sulfate monohydrate | Large | Activated carbon | 1.2 | 850°C | No | Powder (gray) |
| Example 2 | Lithium sulfate monohydrate | Medium | Activated carbon | 1.2 | 850°C | No | Powder (white) |
| Example 3 | Lithium sulfate monohydrate | Small | Activated carbon | 1.2 | 850°C | No | Powder (white) |
| Comparative Example 1 | Lithium sulfate anhydrate | Large | Activated carbon | 1.2 | 850°C | Yes | Powder (black) |
| Comparative Example 2 | Lithium sulfate anhydrate | Medium | Activated carbon | 1.2 | 850°C | Some | Powder (gray) |
| Comparative Example 3 | Lithium sulfate anhydrate | Small | Activated carbon | 1.2 | 850°C | No | Powder (white) |
| Comparative Example 4 | Lithium sulfate anhydrate | Small | Activated carbon | 1.2 | 750°C | Yes | Powder (black) |
| Comparative Example 5 | Lithium sulfate anhydrate | Small | Activated carbon | 1.2 | 900°C | No | Lumpy |

FIG. 4 is the graphs of the test results, illustrating the X-ray diffraction measurement results in Examples. Table 1 indicates that there is no unreacted residue in Examples 1 to 3. In Example 1, the unreacted residue is in the form of a gray powder. In Examples 2 and 3, the unreacted residue is in the form of a white powder. From FIG. 4, it can be seen that in Example 2, only the peaks of the lithium sulfide appear, and the peaks of the raw material lithium sulfate do not appear. In Examples 1 and 3, similar results of the X-ray diffraction measurement are also obtained. In Comparative Example 1, there is unreacted residual carbon, which appears as a black powder. In Comparative Example 2, there is a little amount of unreacted residual carbon, which appears as a gray powder. In Comparative Example 3, there is no unreacted residue, leaving a white powder. In Comparative Example 4, there is unreacted residual carbon, which appears as a black powder. In Comparative Example 5, there is no unreacted residue; the sample is melted and becomes lumpy. From these results, in Examples, the unreacted residue can be reduced more as compared with Comparative Examples. In Examples, the smaller the average particle diameter of the lithium sulfate monohydrate is, the less the unreacted residue can be made. In Comparative Example 3, the same results as Examples can be obtained, but this requires the pulverization process of the raw material. From this test, it was confirmed that the use of the lithium sulfate monohydrate as the raw material can reduce the unreacted residue and produce the lithium sulfide more suitably.

FIG. 5 is the graphs of the test results, illustrating the AC impedance measurement results in Examples. From FIG. 5 and Table 1, it can be seen that the AC impedance is small in Examples 1 to 3. In Comparative Examples 2 and 3, there is a little or no carbon remaining; the AC impedances can be measured, but they are inferior to those of Examples 1 to 3. In Comparative Examples 1 and 4, the AC impedance cannot be measured due to a short circuit caused by the remaining carbon. In Comparative Example 5, the molten sample adhered to the crucible and could not be recovered by processing using a small quantity. From these results, in Examples, higher ionic conductivity than Comparative Examples can obtained. In Examples, the smaller the average particle diameter of the lithium sulfate monohydrate is, the higher the ionic conductivity can be obtained. From this test, it was confirmed that the lithium sulfide having high ionic conductivity can be produced more suitably when the lithium sulfate monohydrate is used as the raw material.

From the above, in the method for producing the lithium sulfide, when the lithium sulfate monohydrate having the average particle diameter in the range of "medium" or "small" is used, the lithium sulfate containing less amount of the unreacted residue and having high ionic conductivity can be obtained. From the above, it can be seen that the lithium sulfate having the targeted ionic conductivity can be suitably produced by conducting the production under the conditions described above.

### Reference Signs List

- 10: Production equipment
- 11: Rotary Kiln
- 12: Kiln main body (furnace)
- 14: Heater
- 16: Driving unit
- 18: Material feeder
- 21: Material reservoir
- 22: Feed pipe

## Claims

1. A method for producing lithium sulfide, the method comprising:
a preparation process at which a raw material and a reducing agent are charged into a furnace, the raw material being mainly composed of lithium sulfate having a property of weight loss of 5% or more to 25% or less upon heating to 120°C; and
a temperature raising process at which the raw material and the reducing agent are heated in the furnace to raise temperature.

2. The method for producing lithium sulfide according to claim 1, wherein at the temperature raising process, a mixture of the raw material and the reducing agent is heated.

3. The method for producing lithium sulfide according to claim 1 or 2, wherein at the temperature raising process, the heating is carried out under an inert atmosphere with a dew point of -60°C in a temperature range of 700°C or higher to 950°C or lower, preferably 800°C or higher to 850°C or lower.

4. The method for producing lithium sulfide according to any one of claims 1 to 3, wherein at the temperature raising process, a temperature raising rate is 10°C/min or higher.
